# EUROPÄISCHE PATENTANMELDUNG

(11) **EP 1 122 529 A2**
(43) Veröffentlichungstag der Anmeldung: **08.08.2001**
(21) Anmeldenummer: 01102284.5
(22) Anmeldetag: 01.02.2001
(51) Int. Cl.: G01M 17/007

(54) **Vorrichtung zur Messung von Drehzahlen und Drehmomenten sowie zur Simulation von Fahrzuständen an einer Abtriebswelle für ein Kraftfahrzeugrad**

(30) Priorität: 04.02.2000 DE 10005043
(71) Anmelder: Norres, Richard, 45896 Gelsenkirchen (DE); Norres, Albert, 45896 Gelsenkirchen (DE)
(72) Erfinder: Norres, Richard, 45896 Gelsenkirchen (DE); Norres, Albert, 45896 Gelsenkirchen (DE)
(74) Vertreter: Eichelbaum, Lambert, Dipl.-Ing.

(57) **Zusammenfassung**

Die Erfindung betrifft eine Vorrichtung (1) zur Messung von Drehzahlen und Drehmomenten sowie zur Simulation von Fahrzuständen an einer Abtriebswelle (3) für ein Kraftfahrzeugrad mit einer Antriebswelle (4) und wenigstens einer, einen Rotor (5) und einen Stator (6) aufweisenden elektrischen Maschine (31), deren Rotorwelle (7) mit der Antriebswelle (4) mechanisch verbunden ist, welche mit der Abtriebswelle (3) für das Kraftfahrzeugrad mechanisch über eine drehfeste, jedoch lösbare Verbindung gekuppelt ist.

Der Erfindung liegt die Aufgabe zugrunde, eine Vorrichtung dieser Art zu schaffen, mit welcher außer den Drehzahl- und Drehmomentenmessungen das Strömungsverhalten eines Kraftfahrzeuges und die Schallintensitätsentwicklung an diesem Kraftfahrzeug in einem Windkanal und gegenüber einem mit herkömmlichen Rädern versehenen Kraftfahrzeug simuliert werden kann.

Diese Aufgabe wird erfindungsgemäß dadurch gelöst, daß die Antriebswelle (4) in an sich bekannter Weise von einem konzentrisch zu dieser angeordneten Statorkranz (8) umgeben ist, der Stator (6) in an sich bekannter Weise an dem Statorkranz (8) befestigt ist und die Vorrichtung (1) an ihrem Außenumfang im wesentlichen die rotationssymmetrische Form eines Kraftfahrzeugrades aufweist und in das Radgehäuse (9) des Kraftfahrzeuges (A) eingepaßt ist.

## Beschreibung

Die Erfindung betrifft eine Vorrichtung zur Messung von Drehzahlen und Drehmomenten sowie zur Simulation von Fahrzuständen an einer Abtriebswelle für ein Kraftfahrzeugrad mit einer Antriebswelle und wenigstens einer, einen Rotor und einen Stator aufweisenden elektrischen Maschine, deren Rotorwelle mit der Antriebswelle mechanisch verbunden ist, welche mit der Abtriebswelle für das Kraftfahrzeugrad mechanisch über eine drehfeste, jedoch lösbare Verbindung gekuppelt ist.

Für die Entwicklung und Erprobung von Kraftfahrzeugen ist in zunehmendem Maße die Erfassung von stationären und dynamischen Betriebszuständen im Stand des Kraftfahrzeuges wichtig, da viele für die Erfassung dieser Betriebszustände erforderlichen Messungen nur mit erhöhtem Aufwand während der Fahrt des Kraftfahrzeuges durchgeführt werden können. Um eine solche Erfassung dynamischer Betriebszustände im Stand des Kraftfahrzeuges zu simulieren, werden die bei der Fahrt auftretenden Belastungen an den Abtriebswellen des Kraftfahrzeuges durch an diese angeschlossene steuerbare Drehmomentgebervorrichtungen hervorgerufen. Eine solche Drehmomentgebervorrichtung kann als elektrische Maschine, insbesondere als herkömmliche elektrische Gleichstrommaschine ausgelegt sein, mit welcher über eine geeignete elektrische Ansteuerung die gewünschten Belastungen aufgebracht werden können.

Eine derartige Vorrichtung ist aus der DE 38 01 647 C2 bekannt. Nach dieser Patentschrift ist eine Vorrichtung zur Prüfung eines Allradantriebes mit zwei Differentialgetrieben offenbart, wobei vier Gleichstrom-Nebenschlußmaschinen an den Achswellen des durch einen Verbrennungsmotor angetriebenen Allradaggregates angeschlossen sind. Die einzelnen Abtriebswellen können zur Belastung von einem Drehmoment beaufschlagt werden, welches mit Hilfe einer Gleichstrommaschine aufgebracht wird. Mit einer solchen Vorrichtung können stationäre und dynamische Betriebszustände bei stillstehendem Kraftfahrzeug erfaßt werden.

Für den Einsatz im Windkanal weist diese Vorrichtung jedoch erhebliche Nachteile auf. Da anstelle der Räder an den vier Abtriebswellen Bremsaggregate mit elektrischen Gleichstrommaschinen angekuppelt sind, unterscheidet sich das Strömungsverhalten der Luft im Bereich der Gleichstrommaschinen von dem Strömungsverhalten der Luft an herkömmlichen Kraftfahrzeugrädern, wenn diese Vorrichtung von dem Allradaggregat auf ein Kraftfahrzeug übertragen und in einem Windkanal betrieben wird. Dies hat Auswirkungen auf den Strömungswiderstand des Kraftfahrzeuges insgesamt und auf die von der strömenden Luft im Bereich der Gleichstrommaschinen z.B. durch Wirbelbildung hervorgerufene Geräuschentwicklung. Insbesondere bei Geräuschmessungen am Kraftfahrzeug, z.B. in dessen Fahrgastinnenraum, wirken sich solche Veränderungen im Strömungsverhalten auf die Schallintensität sowie auf den CW-Wert des Fahrzeuges aus.

Auch das Prüfen von Materialbeanspruchungen einer z.B. stark verwundenen Karosserie eines Vierradantriebes (wobei die 4 Meß-Simulations-Räder auf unterschiedlich hohen und gegeneinander geneigten Ebenen stehen und während eines Tests sogar verändert werden könnten) ist bei Extremtemperaturen sowie unter den dabei entstehenden Schwingungen und Geräuschen unter Motorantrieb und/oder unter Einwirkung fremder Kräfte, wie z.B. unter Bremskrafteinwirkungen oder Schlaglocheinwirkungen, mit der vorgenannten Vorrichtung möglich.

Von diesem Stand der Technik ausgehend, liegt der Erfindung die Aufgabe zugrunde, eine Vorrichtung der eingangs genannten Gattung zu schaffen, mit welcher außer den Drehzahl- und Drehmomentenmessungen das Strömungsverhalten eines Kraftfahrzeuges und die Schallintensitätsentwicklung an diesem Kraftfahrzeug in einem Windkanal sowie die zuvor erwähnten Schwingungsanalysen, Geräuschentwicklungen und Materialspannungen unter Extrembedingungen gegenüber einem mit herkömmlichen Rädern versehenen Kraftfahrzeug simuliert werden kann.

Gemäß einer ersten Alternative wird diese Aufgabe in Verbindung mit dem eingangs genannten Gattungsbegriff erfindungsgemäß dadurch gelöst, daß
- die Antriebswelle in an sich bekannter Weise von einem konzentrisch zu dieser angeordneten Statorkranz umgeben ist,
- der Stator in an sich bekannter Weise an dem Statorkranz befestigt ist und
- die Vorrichtung an ihrem Außenumfang im wesentlichen die rotationssymmetrische Form eines Kraftfahrzeugrades aufweist und in das Radgehäuse des Kraftfahrzeuges eingepaßt ist. Durch diese Ausbildung entspricht das Verhalten der strömenden Luft im Bereich der Vorrichtung dem Verhalten der strömenden Luft im Bereich eines herkömmlichen Kraftfahrzeugrades. Ein im Windkanal angeordnetes und mit der erfindungsegmäßen Vorrichtung versehenes Kraftfahrzeug weist im wesentlichen den gleichen Strömungswiderstand und die gleiche Geräuschentwicklung wie ein Kraftfahrzeug mit herkömmlichen Kraftfahrzeugrädern auf.

Nach einer vorteilhaften Weiterbildung der Erfindung ist der Rotor konzentrisch zu der Antriebswelle angeordnet, die damit zugleich die Rotorwelle bildet, während sich der Stator rings des Statorkranzes entlang dessen kreiszylindrischer Innenseite erstreckt. Dadurch wird ein besonders einfacher Aufbau der Vorrichtung geschaffen, der ohne aufwendige Mechanik, in Anlehnung an eine herkömmliche elektrische Maschine realisiert werden kann.

Gemäß einer zweiten Alternative wird die Aufgabe in Verbindung mit dem eingangs genannten Gattungsbegriff erfindungsgemäß dadurch gelöst, daß
- die Antriebswelle von einem konzentrisch zu dieser angeordneten Statorkranz umgeben ist,
- der Stator an dem Statorkranz befestigt ist und
- die Vorrichtung an ihrem Außenumfang im wesentlichen die rotationssymmetrische Form eines Kraftfahrzeugrades aufweist und in das Radgehäuse des Kraftfahrzeuges eingepaßt ist. Durch diese Ausbildung werden wie bei der Ausbildung gemäß der ersten Alternative das Strömungsverhalten und die Schallintensitätsentwicklung eines mit der erfindungsgemäßen Vorrichtung versehenen Kraftfahrzeuges denen eines mit herkömmlichen Reifen versehenen Kraftfahrzeuges entsprechen.

Nach einer vorteilhaften Weiterbildung der Erfindung ist der Rotor exzentrisch zu der Antriebswelle angeordnet und dessen Rotorwelle am Statorkranz drehbar gelagert und über ein Getriebe mit der Antriebswelle gekuppelt. Durch geeignete Auslegung des Getriebes ist es daher möglich, die Drehzahl der Rotorwelle in einem für die elektrische Maschine vorteilhaften Drehzahlbereich einzustellen.

Es kann nur eine einzige elektrische Maschine in der Vorrichtung ausgebildet sein. Nach einer weiteren, besonders vorteilhaften Ausgestaltung der Erfindung weist die Vorrichtung jedoch mehrere elektrische Maschinen mit je einem Rotor und je einem Stator auf, die im gleichen Abstand voneinander und von der geometrischen Drehachse des Statorkranzes an dessen Innenseite angeordnet sind. Dadurch ist es möglich, von der Vorrichtung aufzunehmende Drehmomente symmetrisch und mit gleichen Drehmomentanteilen auf mehrere elektrische Maschinen zu verteilen. Dies ist insbesondere bei der Simulation von großen Belastungen des Kraftfahrzeuges, wie z.B. bei der Simulation von Vollbremsungen, von Vorteil, weil dann die daraus resultierenden Wärmemengen über eine große Gesamtfläche an die Umgebung übertragen werden können.

Die Rotorwelle kann über einen Antriebszahnriemen oder eine Antriebskette mit der Antriebswelle in Antriebsverbindung stehen. Nach einer vorteilhaften Ausgestaltung der Erfindung wird das Getriebe von einem Planetengetriebe gebildet, dessen Sonnenrad drehfest mit der Antriebswelle und dessen vom Sonnenrad angetriebene Planetenräder drehfest mit der Rotorwelle der jeweiligen elektrischen Maschine verbunden sind. Dadurch wird eine besonders einfach zu realisierende Ausgestaltung des Getriebes geschaffen.

Das Sonnenrad und die Planetenräder können durch aneinanderreibende Reibräder gebildet sein. Nach einer vorteilhaften Ausgestaltung ist jedoch das Planetengetriebe von miteinander im Eingriff stehenden Stirnzahnrädern gebildet. Dies hat den Vorteil, daß stets eine drehfeste Verbindung von Sonnenrad und Planetenräder gewährleistet ist, wohingegen bei einer Kopplung über Reibräder nach deren betriebsbedingter Abnutzung die Gefahr besteht, daß das Sonnenrad zu den Planetenrädern einen zu großen Schlupf aufweist.

Nach einer weiteren, besonders vorteilhaften Ausgestaltung der beiden Lösungsalternativen der Erfindung ist die elektrische Maschine eine an sich bekannte Gleichstrommaschine. Gleichstrommaschinen sind in der Elektrotechnik lange bekannt und weit verbreitet. Mit der Wahl einer solchen Standardmaschine ist folglich eine erhebliche Kosteneinsparung im Vergleich zu selteneren elektrischen Maschinen verbunden. Ferner ist die Steuerungs- und Regeltechnik für Gleichstrommaschinen seit langer Zeit bekannt und darf als ausgereift bezeichnet werden.

Die Vorrichtung kann mit dem Statorkranz unmittelbar auf dem Boden aufsetzen. Nach einer weiteren, besonders vorteilhaften Ausgestaltung der beiden Lösungsalternativen der Erfindung weist die Vorrichtung an ihrem Außenumfang eine Radkranz auf, der mit einem an sich bekannten Reifen versehen ist. Dadurch entspricht die Form der Vorrichtung praktisch der geometrischen Außenform eines herkömmlichen Reifens. Ferner kann das Kraftfahrzeug nun wie ein mit herkömmlichen Reifen versehenes Kraftfahrzeug gerollt und z.B. an einen anderen Ort bewegt und sogar mit eigener Motorkraft gefahren werden, wenn eine vorübergehende Verbindung zwischen Antriebswelle und Statorkranz hergestellt wird, ohne den Statorkranz der Gefahr einer Beschädigung auszusetzen.

Nach einer weiteren Ausgestaltung der ersten und zweiten Alternative der Erfindung weist die Vorrichtung einen mechanisch, hydraulisch, pneumatisch oder elektromagnetisch betriebenen Impulsgeber auf, welcher mit der vom Boden gebildeten Lauffläche des Reifens derart zusammenwirkt, daß der Impulsgeber zur Simulation von Schlaglöchern eine regel- und steuerbare Impulsfolge an die Lauffläche abgibt. Mit einem derartigen Impulsgeber ist es möglich, Fahrbahnunebenheiten zu simulieren.

Die Erfindung wird anhand zweier bevorzugter Ausführungsformen unter Bezugnahme auf die Zeichnung erläutert. In den Zeichnungen zeigen:
Fig. 1 die Seitenansicht eines Kraftfahrzeuges mit einer ersten bevorzugten Ausführungsform der erfindungsemäßen Vorrichtung im Windkanal,
Fig. 2 eine vergrößerte Darstellung des aus Fig. 1 ersichtlichen Kraftfahrzeughecks mit der ersten Ausführungsform,
Fig. 3 die Ansicht eines Diametralschnittes durch die erste Ausführungsform der Erfindung,
Fig. 4 die Stirnansicht der ersten Ausführungsform bei abgenommener Schutzkappe in Richtung des Pfeiles IV von Fig. 3,
Fig. 5 die Ansicht eines Diametralschnittes durch die zweite Ausführungsform der Erfindung und
Fig. 6 eine Stirnansicht dieser zweiten Ausführungsform ohne Schutzkappe in Richtung des Pfeiles VI von Fig. 5.

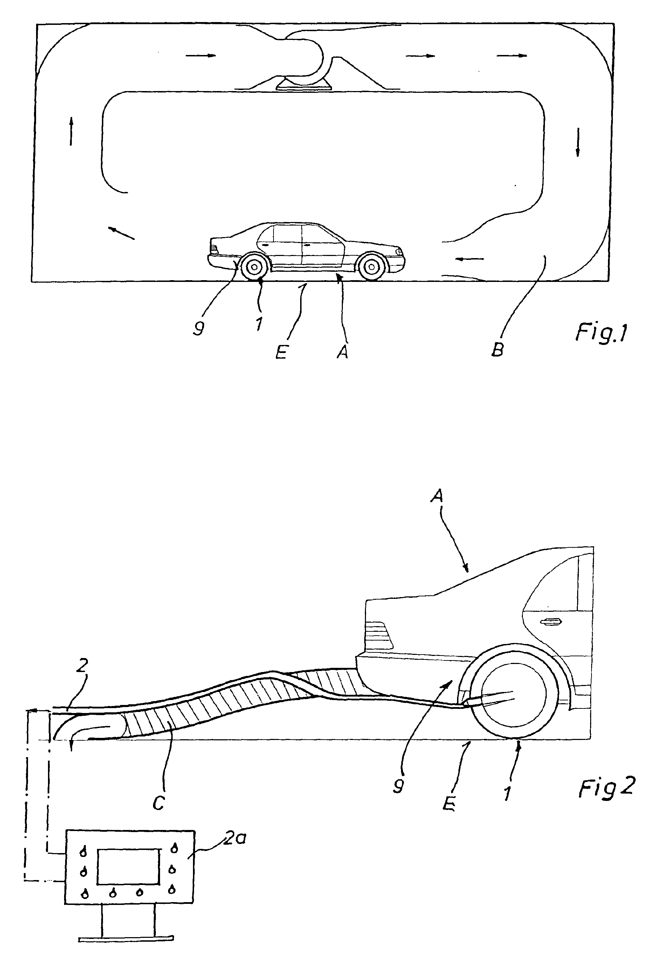

In den Figuren 1 bis 4 ist die erste Ausführungsform der Erfindung dargestellt. Zur Messung von stationären und dynamischen Betriebszuständen eines stehenden Kraftfahrzeuges A, ist dieses A in einem Windkanal B angeordnet, wobei die Luft in Pfeilrichtung durch den Windkanal B strömt. Sowohl zur Abgasmessung als auch zur Vermeidung von Verunreinigungen der Luft im Windkanal B werden die Abgase des Kraftfahrzeuges A durch einen Schlauch C gemäß Fig. 2 aus dem Windkanal B herausgeführt. Die in das Radgehäuse 9 des Kraftfahrzeuges A eingepaßte Vorrichtung 1 nach der ersten Ausführungform ist auf dem Boden E aufgesetzt und gemäß Fig. 2 über elektrische Leitungen 2 mit einer Meß- und Steuervorrichtung 2a verbunden. Zur Vermeidung von zusätzlichen Schallintensitäten, die durch von den elektrischen Leitungen 2 hervorgerufenen Turbulenzen entstehen können, sind die elektrischen Leitungen 2 mit dem Abgasschlauch C aus dem für die Schallintensitätsmessungen relevanten Strömungsbereich herausgeführt.

Die Vorrichtung 1 gemäß der ersten Ausführungform weist eine topfartige Antriebswelle 4 in Form eines einseitig offenen Hohlzylinders auf, dessen geschlossener Boden 4a mittels Schrauben 10 an einem Flansch 11 einer Abtriebswelle 3 für ein Kraftfahrzeugrad befestigt ist. Die Antriebswelle 4 ist konzentrisch von einem Statorkranz 8 umgeben, in welchem sie 4 über Lager 20 drehbar gelagert ist. Die Antriebswelle 4 bildet gemäß der ersten Alternative der Erfindung gleichzeitig die Rotorwelle 7 des Rotors 5 einer elektrischen Gleichstrommaschine, wobei die Wicklung des Rotors 5 am Außenumfang 4b der Antriebswelle 4 vorgesehen ist.

Der Stator 6 der Gleichstrommaschine 31 ist an dem Statorkranz 8 befestigt und erstreckt sich an der kreiszylindrischen Innenumfangsfläche 8a des Statorkranzes 8, wobei die Wicklung des Statorkranzes 8 über die elektrischen Leitungen 2 mit der elektrischen Steuerungs- und Regelungseinheit 2a elektrisch verbunden ist (s. Fig. 2). Demgegenüber ist die Wicklung des Rotors 5 in an sich bekannter Weise über Schleifkontakte 16 und über die elektrischen Leitungen 2 mit der elektrischen Steuerungs- und Regelungseinheit 2a elektrisch verbunden, wobei die Schleifkontakte 16 an der zylindrischen Innenfläche der topfförmigen Antriebswelle 4 angeordnet sind.

Die den Schleifkontakten 16 gegenüberliegenden Schleifbürsten 15 sind am Außenumfang eines zylindrischen Körpers 17 angeordnet, welcher konzentrisch zu der Antriebswelle 4 in deren Hohlraum eingebracht ist und von einer Scheibe 18 gehalten wird, die über Schrauben 19 am Statorkranz 8 befestigt ist.

Der zylindrische Körper 17 weist eine hohlzylindrische Form auf und bildet den Kranz eines Stators 23 für eine zweite elektrische Maschine, die als Drehzahlmeßinstrument zur Messung der Drehzahl der Abtriebswelle 3 dient. Der Stator 23 des Drehzahlmeßinstruments ist kreisringförmig an der kreiszylindrischen Innenumfangsfläche 17a des zylindrischen Körpers 17 befestig. In dem kreiszylindrischen Körper 17 ist die Rotorwelle 24 mit dem Rotor 22 des Drehzahlmeßinstruments beidendig über Lager 24a drehbar gelagert, welche konzentrisch zu der Antriebswelle 4 und der Abtriebswelle 3 angeordnet und mit ersterer 4 über eine Klauenkupplung 24b drehfest gekuppelt ist.

Am Außenumfang 8b des Statorkranzes 8 ist ein konzentrisch zu diesem angeordneter Radkranz 13 vorgesehen, der über Schrauben 14 mit dem Statorkranz 8 drehfest verbunden ist. Von dem als Flachbettfelge ausgebildeten Radkranz 13 ist wie bei einem herkömmlichen Kraftfahrzeugrad ein Luftreifen 13a aufgenommen. Um bei der Simulation von stärkeren Bremsvorgängen eine Drehbewegung des Statorkranzes 8 zu verhindern, kann an diesem eine Verdrehsicherung 21 angebracht werden, wenn die Vorrichtung 1 gemäß der ersten Ausführungsform am Meßplatz angeordnet ist. Die Verdrehsicherung 21 reicht in radialer Richtung über den Umfang des Luftreifens 13a hinaus und kann gegen den Boden E gestützt werden. Sie kann sich auch gegen die Unterseite des Kraftfahrzeuges abstützen, wodurch eine Abstützung vor allem unter Extrembelastungen sehr sicher wird.

Um Luftturbulenzen am inneren Aufbau der Vorrichtung 1 nach der ersten Ausführungsform zu vermeiden, ist sie 1 auf der der Abtriebswelle 3 gegenüberliegenden Seite von einer Schutzkappe 25 abgedeckt, welche über eine Klipsverbindung 26 an einer am Statorkranz 8 vorgesehenen Umfangsnut lösbar befestigt ist.

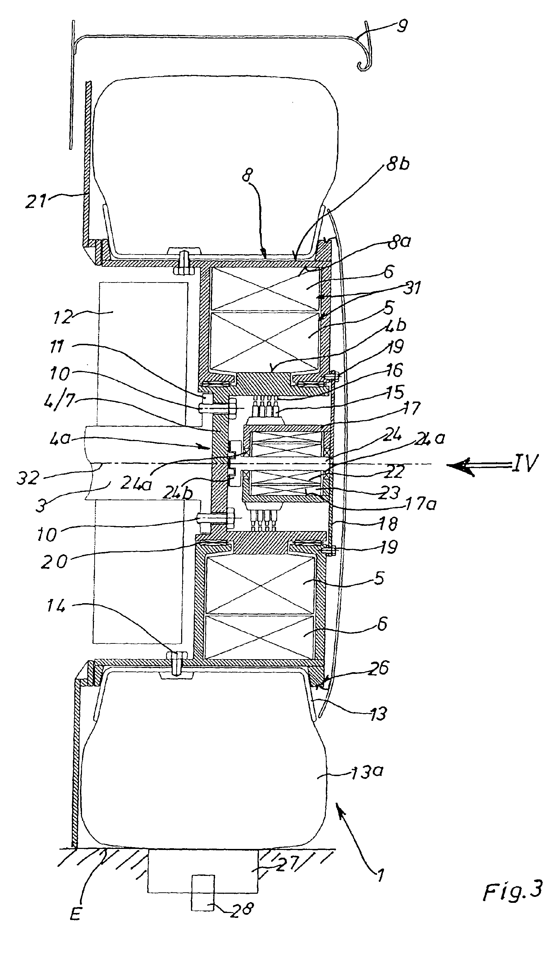

Wie aus den Figuren 2 und 3 ersichtlich ist, weist die Vorrichtung 1 gemäß der vorbeschriebenen ersten Ausführungsform an ihrem Außenumfang im wesentlichen die rotationssymmetrische Form eines Kraftfahrzeugrades auf und ist in das Radgehäuse 9 des Kraftfahrzeuges A eingepaßt.

Zur Simulation von Schlaglöchern ist ferner ein hydraulischer Impulsgeber 27 vorgesehen, welcher entweder - wie dargestellt - im Boden E oder zwischen dem Boden E und der Lauffläche des Luftreifens 13a angeordnet ist und mittels eines mechanisch, hydraulisch, pneumatisch oder elektromagnetisch betriebenen Stoßkolbens 28 zur Simulation von Schlaglöchern eine Impulsfolge an die Lauffläche des Luftreifens 13a abgibt.

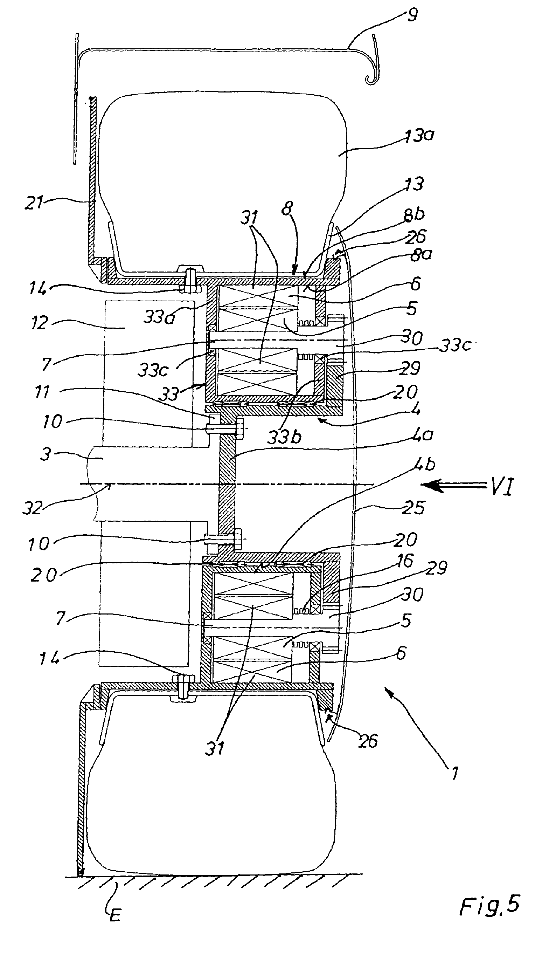

Aus Fig. 5 ist eine zweite Ausführungsform der erfindungsgemäßen Vorrichtung 1 ersichtlich. An dem Flansch 11 der Abtriebswelle 3 eines Kraftfahrzeuges ist über Schrauben 10 eine Antriebswelle 4 in Form eines einseitig offenen, topfförmigen Hohlzylinders mit ihrem geschlossenen Boden 4a befestigt. Die Antriebswelle 4 ist an ihrem Außenumfang konzentrisch von einem Statorkranz 8 umgeben und in diesem über Lager 20 drehbar angeordnet. Mehrere elektrische Gleichstrommaschinen 31 mit je einem Rotor 5 und je einem Stator 6 sind in gleichen Abständen voneinander und von der geometrischen Drehachse 32 des Statorkranzes 8 an dessen Innenseite 8a angeordnet. Jede Gleichstrommaschine 31 weist ein durch den Statorkranz 8, einen an diesem 8 befestigten Gehäuseboden 33a und einen lösbar an dem Statorkranz 8 befestigten Gehäusedeckel 33b gebildetes Statorgehäuse 33 auf, in welchem die Rotorwelle 7 des Rotors 5 über Lager 33c beidendig drehbar gelagert ist.

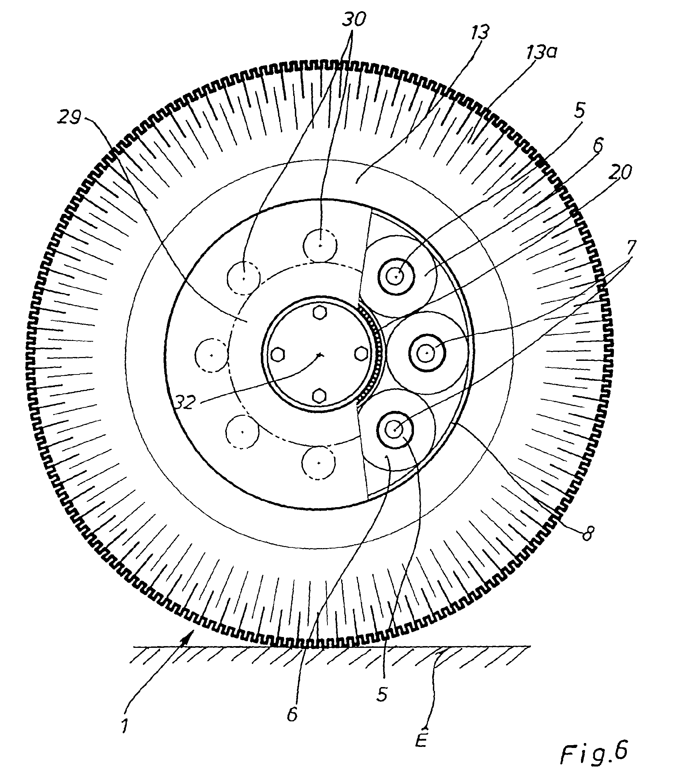

Die Rotorwellen 7 der Rotoren 5 der jeweiligen Gleichstrommaschinen 31 weisen an ihrem der Abtriebswelle 3 abgewandten Ende Planetenräder in Form von Stirnzahnräder 30 auf, welche mit einem ebenfalls als Stirnzahnrad ausgebildeten und mit der Antriebswelle 4 drehfest verbundenen Sonnenrad 29 (s. Fig. 6) in Antriebsverbindung stehen. Am Außenumfang 8b des Statorkranzes 8 ist ein konzentrisch zu diesem angeordneter Radkranz 13 über Schrauben 14 drehfest mit dem Statorkranz 8 verbunden. Von dem als Flachbettfelge ausgebildeten Radkranz 13 wird ein Luftreifen 13a aufgenommen. Zur Vermeidung einer Drehbewegung des Statorkranzes 8 bei der Simulation eines starken Bremsvorganges wird eine in radialer Richtung über den Luftreifen 13a hinausragende Verdrehsicherung 21 an dem Statorkranz 8 befestigt, sobald die Vorrichtung 1 den Meßplatz erreicht hat.

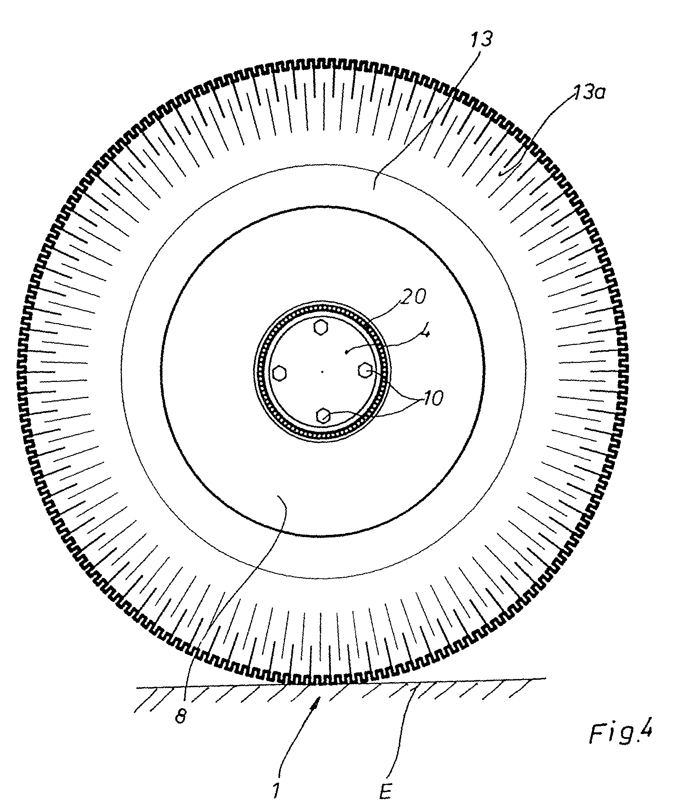

Ferner ist wie bei der ersten Ausführungsform gemäß den Figuren 3 und 4 die Vorrichtung 1 nach dieser zweiten Ausführungsform gemäß den Figuren 5 und 6 an ihrer der Abtriebswelle 3 gegenüberliegenden Stirnseite von einer Schutzkappe 25 abgedeckt, welche mittels einer Klipsverbindung 26 an einer am Statorkranz 8 vorgesehenen Umfangsnut eingeklipst ist, um Luftturbulenzen am inneren Aufbau der Vorrichtung 1 zu vermeiden.

Wie aus Fig. 5 außerdem entnommen werden kann, weist auch diese zweite Ausführungsform an ihrem Außenumfang im wesentlichen die rotationssymmetrische Form eines Kraftfahrzeugrades auf und ist in das Radgehäuse 9 des Kraftfahrzeuges A eingepaßt.

Der Radkranz 13 ist bei beiden Ausführungsformen über Schrauben 14 mit dem Statorkranz 8 drehfest verbunden. Bei der Verwendung des Impulsgebers 27 zur Simulation von Schlaglöchern kann es jedoch vorteilhaft sein, wenn der Radkranz 13 nicht drehfest, sondern über ein Gleitlager mit dem Statorkranz 8 verbunden und um die geometrische Drehachse 32 drehbar ist.

Bei besonders hohen Belastungen, insbesondere bei der Simulation von Bremsvorgängen, können die Gleichstrommaschinen 31 überhitzt werden. In diesem Fall ist es sinnvoll, sie über ein Kühlmittel, wie z.B. flüssigen Stickstoff, zu kühlen. Damit wird die Belastungsfähigkeit der Gleichstrommaschinen 31 erhöht, wobei der flüssige Stickstoff über eine separate Leitung zusammen mit den aus Fig. 2 ersichtlichen elektrischen Leitungen 2 der Vorrichtung 1 zugeführt wird. In einem derart gekühlten System können auch elektrische Maschinen verwendet werden, deren elektrische Spulen aus supraleitendem Material beschaffen sind.

Bei beiden Ausführungsformen kann der als einteilige Flachbettfelge beschriebene Radkranz 13 auch als eine aus mehreren Teilen zusammengesetzte Felge ausgebildet sein. Dies erleichtert die Montage des Luftreifens 13a auf den Radkranz 13. Ferner können Radkränze 13 mit unterschiedlichen Außendurchmessern für die Montage an den Statorkranz 8 vorgesehen sein, um die Vorrichtung 1 unterschiedlichen Reifengrößen anpassen zu können.

### Bezugszeichenliste:

- Kraftfahrzeug: A
- Windkanal: B
- Abgasschlauch: c
- Vorrichtung: 1
- elektrische Leitungen: 2
- Steuervorrichtung: 2a
- Abtriebswelle: 3
- Antriebswelle: 4
- Boden: 4a
- Außenumfang: 4b
- Rotor: 5
- Stator: 6
- Rotorwelle: 7
- Statorkranz: 8
- Innenumfangsfläche: 8a
- Außenumfangsfläche: 8b
- Radgehäuse: 9
- Schraube: 10
- Flansch: 11
- Bremse: 12
- Radkranz: 13
- Luftreifen: 13a
- Schraube: 14
- Schleifbürsten: 15
- Schleifkontakte: 16
- zylindrischer Körper: 17
- Innenumfangsfläche: 17a
- Scheibe: 18
- Schraube: 19
- Lager: 20
- Verdrehsicherung: 21
- Rotor der zweiten elektrischen Maschine: 22
- Stator der zweiten elektrischen Maschine: 23
- Rotorwelle der zweiten elektrischen Maschine: 24
- Lager für die Rotorwelle 7 der zweiten elektrischen Maschine 31: 24a
- Klauenkupplung: 24b
- Schutzkappe: 25
- Klipsverbindung: 26
- Impulsgeber: 27
- Stoßzylinder: 28
- Sonnenrad: 29
- Planetenräder: 30
- Gleichstrommaschinen: 31
- geometrische Drehachse: 32
- Statorgehäuse: 33
- Gehäuseboden: 33a
- Gehäusedeckel: 33b
- Lager: 33c

## Patentansprüche

1. Vorrichtung zur Messung von Drehzahlen und Drehmomenten sowie zur Simulation von Fahrzuständen an einer Abtriebswelle für ein Kraftfahrzeugrad mit einer Antriebswelle und wenigstens einer, einen Rotor und einen Stator aufweisenden elektrischen Maschine, deren Rotorwelle mit der Antriebswelle mechanisch verbunden ist, welche mit der Abtriebswelle für das Kraftfahrzeugrad mechanisch über eine drehfeste, jedoch lösbare Verbindung gekuppelt ist, **dadurch gekennzeichnet**, daß
- die Antriebswelle (4) in an sich bekannter Weise von einem konzentrisch zu dieser angeordneten Statorkranz (8) umgeben ist,
- der Stator (6) in an sich bekannter Weise an dem Statorkranz (8) befestigt ist und
- die Vorrichtung (1) an ihrem Außenumfang im wesentlichen die rotationssymmetrische Form eines Kraftfahrzeugrades aufweist und in das Radgehäuse (9) des Kraftfahrzeuges (A) eingepaßt ist.

2. Vorrichtung nach Anspruch 1, **dadurch gekennzeichnet**, daß der Rotor (5) konzentrisch zu der Antriebswelle (4) angeordnet ist, die damit zugleich die Rotorwelle (7) bildet, während sich der Stator rings des Statorkranzes (8) an dessen kreiszylindrischer Innenseite (8a) erstreckt.

3. Vorrichtung zur Messung von Drehzahlen und Drehmomenten sowie zur Simulation von Fahrzuständen an einer Abtriebswelle für ein Kraftfahrzeugrad mit einer Antriebswelle und wenigstens einer, einen Rotor und einen Stator aufweisenden elektrischen Maschine, deren Rotorwelle mit der Antriebswelle mechanisch verbunden ist, welche mit der Abtriebswelle für das Kraftfahrzeugrad mechanisch über eine drehfeste, jedoch lösbare Verbindung gekuppelt ist, **dadurch gekennzeichnet**, daß
- die Antriebswelle (4) von einem konzentrisch zu dieser angeordneten Statorkranz (8) umgeben ist,
- der Stator (6) an dem Statorkranz (8) befestigt ist und
- die Vorrichtung (1) an ihrem Außenumfang im wesentlichen die rotationssymmetrische Form eines Kraftfahrzeugrades aufweist und in das Radgehäuse (9) des Kraftfahrzeuges (A) eingepaßt ist.

4. Vorrichtung nach Anspruch 3, **dadurch gekennzeichnet**, daß der Rotor (5) exzentrisch zu der Antriebswelle (4) angeordnet und dessen Rotorwelle (7) am Statorkranz (8) drehbar gelagert und über ein Getriebe mit der Antriebswelle (4) gekuppelt ist.

5. Vorrichtung nach Anspruch 4, **dadurch gekennzeichnet**, daß die Vorrichtung (1) mehrere elektrische Maschinen (31) mit je einem Rotor (5) und je einem Stator (6) aufweist, die in gleichen Abständen voneinander und von der geometrischen Drehachse (32) des Statorkranzes (8) an dessen Innenumfangsfläche (8a) angeordnet sind.

6. Vorrichtung nach Anspruch 4 oder 5, **dadurch gekennzeichnet**, daß das Getriebe von einem Planetengetriebe (29, 30) gebildet ist, dessen Sonnenrad (29) drehfest mit der Antriebswelle (4) und dessen vom Sonnenrad (29) angetriebene Planetenräder (30) drehfest mit der Rotorwelle (7) der jeweiligen elektrischen Maschine (31) verbunden sind.

7. Vorrichtung nach Anspruch 6, **dadurch gekennzeichnet**, daß das Planetengetriebe (29, 30) von miteinander im Eingriff stehenden Stirnzahnrädern gebildet ist.

8. Vorrichtung nach einem der Ansprüche 1 bis 7, **dadurch gekennzeichnet**, daß die elektrische Maschine (31) eine an sich bekannte Gleichstrommaschine ist.

9. Vorrichtung nach einem der Ansprüche 1 bis 8, **dadurch gekennzeichnet,** daß die Vorrichtung (1) an ihrem Außenumfang einen Radkranz (13) aufweist, der mit einem an sich bekannten Luftreifen (13a) versehen ist.

10. Vorrichtung nach Anspruch 9, **dadurch gekennzeichnet**, daß sie einen mechanisch, hydraulisch, pneumatisch oder elektromagnetisch betriebenen Impulsgeber (27) aufweist, welcher mit der vom Boden (E) gebildeten Lauffläche des Reifens (13a) derart zusammenwirkt, daß der Impulsgeber (27) zur Simulation von Schlaglöchern eine regel- und steuerbare Impulsfolge auf die Lauffläche überträgt.
